# EUROPEAN PATENT SPECIFICATION

(11) **EP 0 407 695 B1**
(45) Date of publication and mention of the grant of the patent: **10.11.1993**
(21) Application number: 90107168.8
(22) Date of filing: 14.04.1990
(51) Int. Cl.: B60S 3/06

(54) **Car washing system with almost elliptic toroidal brushes rotating on longitudinal horizontal axes**
Fahrzeugwaschanlage mit beinahe elliptischen zylindrischen Bürsten die auf in Längsrichtung waagerechten Achsen drehen
Système de lavage de véhicule à brosses toroidales sensiblement elliptiques tournant sur des axes longitudinaux horizontaux

(30) Priority: 14.07.1989 IT 1254989
(43) Date of publication of application: 16.01.1991
(73) Proprietor: AUTOEQUIP LAVAGGI S.R.L., I-14059 Vesime (AT) (IT)
(72) Inventor: Murialdi, Michele, I-14059 Vesime (AT)
(74) Representative: Ferrarotti, Giovanni

(56) References cited:
- DE-A- 2 313 385
- FR-A- 2 556 298
- US-A- 2 830 311
- US-A- 3 877 107

## Description

Several car washing systems are known which can be grouped under two categories:
a) fixed systems in which the car to be washed is moving;
b) mobile systems in which the car is stationary.

The washing facilities of type a) systems are mounted on a fixed portal and the automotive vehicle is usually pushed through the brush fitted portal by a revolving belt acting on one or more wheels.

In type b) systems, the automotive vehicle is placed in a stable position and the washing facilities are usually mounted on a first portal, whereas the drying equipment is mounted on a second portal; both portals are sliding along lateral guides thus covering the whole length of the car to be washed.

Washing stations are also known in which the washing and drying facilities are mounted on one single portal.

Both car washing systems are equipped with large rotary brushes. In particular, they require at least two large brushes with vertical axes to clean the sides of the car and at least one large brush with transverse horizontal axis to wash the front and top of the car.

These known washing stations are described in US-A-2830311 and US-A-3877107.

It is also known FR-A-2556298, which foresees, besides the usual vertical and horizontal-transversal brushes, two lateral brushes too, which rotate on longitudinal-horizontal axes for cleaning only the wheels of the car. It is also known DE-A-2313385, which foresees particular brushes effecting mixted movements of rotation and revolution on different axes.

Some of these systems are also equiped with detergent dispensers and waxing facilities usually mounted on the second portal on which the drying equipment is also installed.

All these systems require specific operating modes. In fixed portal systems, the car when passing through the portal, is sprayed with a detergent and then cleaned with the rotary brushes and running water.

In mobile portal systems:
- During its foreward movement, the car is sprayed with a detergent followed by initial cleaning with the large brushes;
- During its backward movement, the car receives a second wash followed by waxing and drying.

All these systems, although more or less meeting cleaning requirements, have the drawback that the brushes are cylindrical; the lateral brushes are revolving around a vertical or almost vertical axis so that the bristles follow a circular path on a horizontal plane thus efficiently acting on horizontal moldings and shapings, but with no or little efficiency when acting on vertical or transverse moldings or shapes. The horizontal bristles are likewise following a circular path on a longitudinal vertical plane, thus efficiently acting on longitudinal moldings and shapings, but with no or little efficiency when acting on transverse moldings or shapes.

This invention has the aim to improve the car washing system by adopting a special brush type capable of acting efficiently on both vertical and transverse moldings and shapes.

According to this invention, this brush has an ellipse-like cross section and is transversally rotating with respect to the car on a longitudinal horizontal axis. Usually, two such revolving elliptic brushes are provided both mounted on the same motor-driven supporting structure. The brushes may act pairwise on the sides of the car as well as on its top surfaces.

According to this invention, these elliptic brushes are profitably combined with cylindrical brushes. In fixed portal systems, the invention offers the basic advantage of achieving double cleaning of tile car sides in horizontal direction (cylindrical brushes) and in vertical and transverse direction (elliptic brushes) in one single operation, and possibly also double cleaning of the top surfaces in longitudinal direction (cylindrical brushes) as well as in transverse direction (elliptic brushes), to be followed by a final wash. The results are much better than can be obtained in current car washing stations using only cylindrical brushes. The advantages of the invention for mobile portal systems consist in the fact that the combined action of cylindrical and elliptic brushes ensures careful cleaning already during the forward motion of the car, so that the backward run can be used for drying or for cleaning of another car, thus halving the normal washing time from 3 minutes to 1.5 minutes only.

The invention in question is illustrated in a practical exemplifying implementation for cleaning of the car sides, in the enclosed drawing, in wich :
**Fig.1** shows a front view of the two elliptic brush assembly;
**Fig.2** shows a side view of the assembly illustrated in fig.1;
Fig.3 shows a schematic view of the portal equipped with the combined elliptic and cylindrical brushes.

With reference to these figures, 1 and 2 refer to the elliptic brushes supported by an arm 3 oscillating on a pin 4 with longitudinal horizontal axis, supported by the portal frame 5. These brushes, preferably mounted on the two sides of the arm 3, are located on transverse planes of the portal system 5 and of the car to be washed 6 and are therefore revolving on the pins 7, 8 with longitudinal horizontal axes. These elliptic brushes 1, 2 are preferable rotating in opposite directions and are generally converging on the car side 6.

The exemplified movement shown in the drawings is obtained by sprocket wheel drives. The geared motor 9 located at the top of the oscillating arm 3, drives the chain 10 which in turn moves the pin 7 and the upper brush 1. The rotary motion of the pin 7 is transmitted in opposite direction to the driven pin 11 by means of the gear wheels 12, 13. A chain 14 is linking the driven pin 11 to the pin 8 of the second elliptic brush 2 which is thus revolving in opposite direction to the former.

Obviously, this driving system of the two brushes can also be obtained by other means, such as for instance by a worm screw driven by the geared motor 9 and gears connected to the pins 7, 8 of the two brushes 1, 2 provided the threads of the worm screw matching the two gear wheels of the two pins are wound in opposite directions so as to ensure opposed rotation of the brushes 1,2.

The elliptic brushes 1, 2 may be circular but should preferably have an extended configuration on their axis, i.e. they should have an almost elliptic shape since this is particularly efficient for cleaning purposes because of the oscillating movement applied to the brush as a result of more or less stronger adhesion of the bristles to the car.

The figures show the preferential exemplified solution with two elliptic rotary brushes 1,2 supported by an arm 3, but it is obvious that solutions with one single brush or several brushes mounted on the same arm are also possible.

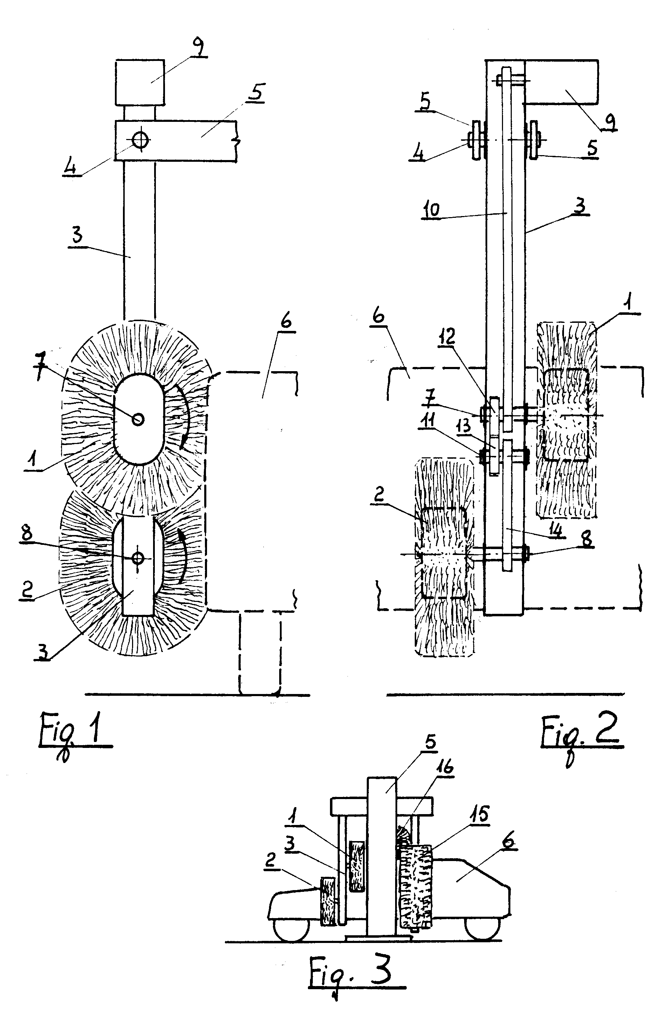

Fig.3 shows that these rotating elliptic brushes 1, 2 are combined with normal cylindrical brushes 15 with vertical axis, thus obtaining the above described advantages, but this does not exclude the possibility to devise a car washing system fitted with elliptic rotary brushes only .

Like already described, one or more elliptic brushes rotate transversally to the system and to the car may be provided to clean the top surfaces of the car. These eliptic brushes are preferentially combined with the large cylindrical brush 16 with transverse horizontal axis and these rotating elliptic brushes will be lifted and lowered by a special mechanism so as to follow the upper longitudinal profile of the car.

Based upon the foregoing, the adoption of elliptic brushes rotating in transverse vertical planes, especially if combined with normal cylindrical brushes will considerably improve the washing quality, particularly in mobile portal car wash facilities thus reducing the cycle time.

For these mobile portal facilities and in view of the fact that the car wash is followed by drying, a car wash during each portal run (forward and backward movement) will require, according to the invention, two drying systems, one on each side of the single portal or one single drying system mounted on the second portal running on its own track rails and capable of by-passing the first "car wash" portal to take up its position on either side of the latter to provide for drying of the car after each washing operation.

## Claims

1. Car washing system comprising a fixed or mobile portal (5) running on rails and rotating brushes (1, 2) in contact with the outer surface of a car to be cleaned, said portal (5) supporting an arm (3) oscillating on a pin (4) with longitudinal horizontal axis, on which said rotating brushes (1, 2) are mounted by means of rotating longitudinal and horizontal pins (7, 8) **characterized** in that said brushes (1, 2) have an extended ellipse-like cross section in the plane perpendicular to the axis of rotation whereby during rotation of said brushes a variable adhesion of the bristles of said brushes (1, 2) to a car occurs.

2. Car washing system according to claim 1, **charac terized** by that the brushes (1, 2) mounted by means of rotating longitudinal and horizontal pins (7, 8) cooperate with cylindrical brushes (15, 16) rotating on vertical axis and on transversal horizontal axis.

3. Car washing system according to claim 1, **charac terized** by that said two brushes (1, 2) are reciprocally rotating in opposite directions on both sides of the oscillating arm (3) and preferably in the same direction on the side in touch with the car (6) and are acting on the lateral car surfaces.

4. Car washing system according to claim 1, **charac terized** by that one or two brushes (1, 2) are rotating and acting on the top surfaces of the car (6) supported by fixtures which allow to follow the longitudinal profile of the car.

5. Car washing system according to claim 1, **charac terized** by that two drying systems are located on both sides of the portal (5) on which the brushes (1, 2,15,16) are mounted and will provide for car drying after two washing operations performed during the forward and backward motion of the portal (5).

6. Car washing system according to claim 5, **charac terized** by that a second mobile portal will be provided running on its own track and capable of bypassing the first portal (5) of the brushes to take up position on either side of the first portal (5).

## Patentansprüche

1. Fahrzeugwaschanlage mit einem festen oder auf Schienen laufenden beweglichen Portal (5) sowie drehbaren Bürsten (1, 2), die die Außenfläche eines zu reinigenden Fahrzeuges berühren, wobei das Portal (5) einen um einen Zapfen (4) mit horizontaler Längsachse schwenkbaren Arm (3) trägt, an dem die drehbaren Bürsten (1, 2) mittels drehbarer horizontaler Längszapfen gelagert sind, **dadurch gekennzeichnet**, daß die Bürsten (1, 2) in einer Ebene quer zu ihrer Drehachse einen ellipsenähnlichen Querschnitt aufweisen, wodurch während der Drehung der Bürsten eine veränderliche Adhäsion der Borsten dieser Bürsten (1, 2) auf ein Fahrzeug auftritt.

2. Fahrzeugwaschanlage nach Anspruch 1, **dadurch gekennzeichnet**, daß die mittels drehbarer horizontaler Längszapfen (7, 8) gelagerten Bürsten (1, 2) mit zylindrischen Bürsten (15, 16) zusammenwirken, die um vertikale und horizontale quer verlaufende Achsen drehbar sind.

3. Fahrzeugwaschanlage nach Anspruch 1, **dadurch gekennzeichnet**, daß die beiden Bürsten (1, 2) in zueinander entgegengesetzten Richtungen an beiden Seiten des schwenkbaren Armes (3) drehbar sind und vorzugsweise in der gleichen Seitenrichtung in Berührung mit dem Fahrzeug (6) auf die seitlichen Fahrzeugflächen einwirken.

4. Fahrzeugwaschanlage nach Anspruch 1, **dadurch gekennzeichnet**, daß eine oder zwei Bürsten (1 und 2) drehbar sind und auf die oberen Flächen des Fahrzeuges (6) einwirken, wobei sie durch Befestigungen gelagert sind, die es ermöglichen, dem Längsprofil des Fahrzeuges zu folgen.

5. Fahrzeugwaschanlage nach Anspruch 1, **dadurch gekennzeichnet**, daß zwei Trockeneinrichtungen an beiden Seiten des Portals (5), auf dem die Bürsten (1, 2, 15, 16) gelagert sind, angeordnet sind, wobei die beiden Trockeneinrichtungen für eine Fahrzeugtrocknung nach zwei Waschvorgängen vorgesehen sind, die während einer Vorwärts- und einer Rückwärtsbewegung des Portals (5) durchgeführt wurden.

6. Fahrzeugwaschanlage nach Anspruch 5, **dadurch gekennzeichnet**, daß ein zweites bewegliches Portal vorgesehen ist, das auf seinen eigenen Schienen läuft und am ersten Portal (5) der Bürsten vorbeibewegbar ist, um eine Stellung an der anderen Seite des ersten Portals (5) einzunehmen.

## Revendications

1. Système de lavage pour véhicule comprenant un portique (5) fixe ou mobile circulant sur des rails et des brosses rotatives (1, 2) en contact avec la surface extérieure d'un véhicule à laver, ledit portique (5) supportant un bras (3) oscillant autour d'un arbre (4) à axe longitudinal horizontal, sur lequel sont montées des brosses rotatives (1, 2) au moyen d'arbres rotatifs longitudinaux et horizontaux (7, 8), caractérisé en ce que lesdites brosses (1, 2) ont une section transversale allongée en forme d'ellipse dans le plan perpendiculaire à l'axe de rotation de façon qu'au cours de la rotation desdites brosses il se produise une adhérence variable des poils desdites brosses (1, 2) avec le véhicule.

2. Système de lavage pour véhicule selon la revendication 1, caractérisé en ce que les brosses (1, 2) montées au moyen d'arbres rotatifs longitudinaux et horizontaux (7, 8) coopèrent avec des brosses cylindriques 15, 16) rotatives autour d'un axe vertical et d'un axe horizontal transversal.

3. Sysstème de lavage pour véhicule selon la revendication 1, caractérisé en ce que lesdites deux brosses (1, 2) sont en rotation alternée dans des directions opposées sur les deux côtés du bras oscillant (3) et, de préférence, dans la même direction sur le côté en contact avec le véhicule (6) et agissent sur les surfaces latérales du véhicule.

4. Système de lavage pour véhicule selon la revendication 1, caractérisé en ce qu'une ou deux brosses (1, 2) sont rotatives et agissent sur les surfaces supérieures du véhicule (6) en étant supportées par des montures qui leur permettent de suivre le profil longitudinal du véhicule.

5. Système de lavage pour véhicule selon la revendication 1, caractérisé en ce que deux systèmes de séchage sont installés des deux côtés du portique (5) sur lequel sont montées les brosses (1, 2, 15, 16) et assurent le séchage du véhicule après deux opérations de lavage effectuées au cours du mouvement en avant et du mouvement en arrière du portique (5).

6. Système de lavage pour véhicule selon la revendication 5, caractérisé en ce qu'un second portique mobile est installé pour circuler sur ses propres rails de guidage et capable de passer devant le premier portique (5) portant les brosses pour se mettre en place d'un côté ou de l'autre du premier portique (5).
